# EUROPÄISCHE PATENTSCHRIFT

(11) **EP 2 499 378 B1**
(45) Veröffentlichungstag und Bekanntmachung des Hinweises auf die Patenterteilung: **30.03.2016**
(21) Anmeldenummer: 10779532.0
(22) Anmeldetag: 11.11.2010
(51) Int. Cl.: F04D 25/04, F04D 29/42, F04D 29/62, F02C 6/12, F04D 29/58

(54) **TURBOLADERGEHÄUSE**
TURBOCHARGER HOUSING
CARTER DE TURBOCOMPRESSEUR

(30) Priorität: 13.11.2009 DE 102009053106; 01.04.2010 DE 102010015113
(43) Veröffentlichungstag der Anmeldung: 19.09.2012
(73) Patentinhaber: Continental Automotive GmbH, 30165 Hannover (DE)
(72) Erfinder: BÖNING, Ralf, 67829 Reiffelbach (DE); FÄTH, Holger, 67136 Fußgönheim (DE); KÖMPEL, Ralph-Maurice, 68159 Mannheim (DE)
(74) Vertreter: Waldmann, Georg Alexander
(86) Internationale Anmeldenummer: PCT/EP2010/067295
(87) Internationale Veröffentlichungsnummer: WO 2011/058104

(56) Entgegenhaltungen:
- US-A- 4 541 786
- US-A- 5 102 305
- US-A- 5 310 311

## Beschreibung

Die vorliegende Erfindung betrifft ein Turboladergehäuse gemäß dem Oberbegriff des Anspruchs 1, wobei das Turboladergehäuse ein Verdichtergehäuse und ein Turbinengehäuse, sowie ein Lagergehäuse aufweist. Ein solches Turboladergehäuse ist aus US 5 102 305 A bekannt.

Allgemein dienen Turbolader dazu den Wirkungsgrad eines Verbrennungsmotors zu verbessern und damit dessen Leistung zu steigern. Der Turbolader weist hierzu eine Turbine mit einem Turbinenrad und einen Verdichter mit einem Verdichterrad auf, wobei die beiden Laufräder auf einer gemeinsamen Läuferwelle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet hierbei die angesaugte Luft und führt diese der Brennkraftmaschine zu. Die Läuferwelle ist dabei in einem Lagergehäuse des Turboladers gelagert. Des Weiteren ist das Turbinenrad der Turbine in einem Turbinengehäuse angeordnet und das Verdichterrad des Verdichters in einem Verdichtergehäuse. Lagergehäuse, Turbinengehäuse und Verdichtergehäuse bilden zusammen das Turboladergehäuse. Turbinenrad, Verdichterrad und die Läuferwelle bilden zusammen das Laufzeug.

Ein solcher Turbolader hat im Betrieb an der Brennkraftmaschine bzw. einem angeschlossenen Motor verschiedenste Anforderungen zu erfüllen. Eine dieser Anforderungen ist die auftretenden hohen Temperaturen aufzunehmen, die beispielsweise aufgrund des heißen Abgasmassenstroms in dem Turboladergehäuse entstehen können.
Die übliche Konstruktion des Turboladers sieht dabei einzelne Gehäuse vor, mit einem jeweils an die dort herrschende Temperatur angepassten Werkstoff. Dabei ist das Verdichtergehäuse üblicherweise aus Aluminium, während das Lagergehäuse aus Grauguss ist, wobei das Lagergehäuse zusätzlich auch wassergekühlt ausgeführt werden kann. Das Turbinengehäuse ist wiederum im Allgemeinen aus Werkstoffen mit einem hohen Nickelanteil, aufgrund der hohen Temperaturen die in diesem Bereich herrschen. Aufgrund der angepassten, unterschiedlichen Werkstoffe für die einzelnen Gehäuse, sind diese Gehäuse als separate Teile ausgebildet, die miteinander verbunden werden und dabei außerdem gegeneinander abgedichtet werden müssen. Ein solcher Turbolader ist daher aufwendig in der Herstellung und der Montage.

Ein Turboladergehäuse, das die oben genannten Nachteile vermeidet ist zum Beispiel in der deutschen Patentanmeldung 10 2009 053 106.8 offenbart. Dabei ist das Turboladergehäuse zumindest teilweise oder vollständig in Längsrichtung, das heißt in Längsrichtung der Läuferwelle, in wenigstens zwei Gehäuseteile geteilt ausgebildet ist, wobei der in Längsrichtung geteilte Abschnitt des Turboladergehäuses jeweils einen Teil des Verdichtergehäuses, des Lagergehäuses und/oder des Turbinengehäuses umfasst. Das Turboladergehäuse kann dabei beispielsweise aus Aluminium oder einer Aluminiumlegierung oder aus einem anderen Metall oder Metalllegierung hergestellt sein oder einem anderen geeigneten Material.

Durch die Teilung in Längsrichtung, im vorliegenden Beispiel als horizontale oder im Wesentlichen horizontale Teilung bezeichnet, ergeben sich zunächst direkte Vorteile. So ist eine automatisierte Vormontage des Laufzeugs, darunter die beiden Laufräder, wie das Verdichterrad und das Turbinenrad, sowie der Läuferwelle möglich. Die anschließende Montage in dem Turbolader wird dabei deutlich vereinfacht.

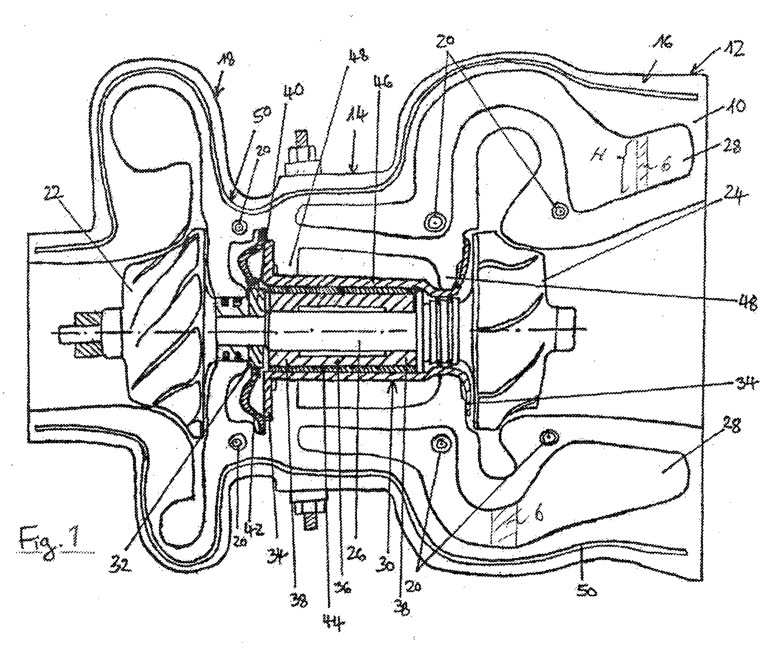

Des Weiteren ist eine zusätzliche Temperierung, z.B. Kühlung und/oder Heizung, zumindest eines Teils des Turboladergehäuses vorgesehen, beispielsweise des Turbinengehäuses, des Lagergehäuses und/oder des Verdichtergehäuses. Dazu ist ein Fluid- oder Temperiermantel mit einem Fluidkern vorgesehen. Dieser Fluidmantel umspannt, wie beispielsweise in Fig. 1 gezeigt, den Lagergehäuseabschnitt und den Turbinengehäuseabschnitt des Turboladergehäuses. Durch den Fluid- oder Temperiermantel mit einem Fluidkern, oder auch Fluidraum genannt, fließt ein Kühlmedium. Dadurch können das Turbinengehäuse und das Lagergehäuse zusätzlich gekühlt werden.

Das Turboladergehäuse hat dabei den Vorteil, dass das Laufzeug, d.h. die Laufräder auf der Läuferwelle sowie die Lageranordnung der Läuferwelle, vormontiert werden kann und anschließend komplett in die Gehäusehälften eingelegt werden kann. Des Weiteren kann das Lauf zeug zuvor einem Betriebsauswuchten unterzogen werden, ohne zuvor in dem Turboladergehäuse montiert sein zu müssen.

Jedoch werden die in ein Turboladergehäuse integrierten Fluidräume häufig sehr flach ausgeführt, um Gewicht und Bauraum zu sparen. Dadurch leidet allerdings oftmals das Fließverhalten des Kühlmediums und es kommt zu ungleichmäßigen Durchströmungen des Fluidraumes und dadurch zur ungleichmäßigen Kühlung. Im Extremfall kann es geschehen, dass ein an sich zu kühlender Teil des Turboladergehäuses beim Betrieb des Turboladers schlecht oder gar nicht gekühlt wird.

Aufgabe der vorliegenden Erfindung ist es, ein verbessertes Turboladergehäuse bereitzustellen, das die vorgenannten Nachteile nicht aufweist.

Diese Aufgabe wird bei einem gattungsgemäßen Turboladergehäuse mit den kennzeichnenden Merkmalen von Patentanspruch 1 gelöst.

Bei diesem Turboladergehäuse ist zumindest ein Abschnitt, gebildet aus Turbinengehäuse, Lagergehäuse und/oder Verdichtergehäuse, in Längsrichtung in zwei Gehäusehälften unterteilt, die im zusammengebauten Zustand abschnittsweise ein Lagergehäuse, ein Turbinengehäuse und ein Verdichtergehäuse bilden. Dabei ist wenigstens ein Fluidraum im Lagergehäuse und/oder im Turbinengehäuse und/oder im Verdichtergehäuse wenigstens einer der beiden Gehäusehälften angeordnet, der im Betrieb mit einem Kühlmedium beschickt wird. Der Fluidraum ist dabei dadurch gekennzeichnet, dass er eine Mehrzahl von erhabenen Stegen aufweist, die wie Drosselstellen für das Kühlmedium wirken, wodurch das Kühlmedium Strömungen ausbildet, die in verschiedene Richtungen verlaufen. Dadurch wird verhindert, dass einzelne Teilbereiche des Turboladers ungenügend oder gar überhaupt nicht gekühlt werden.

Vorteilhafte Aus- und Weiterbildungen der Erfindung sind in den Unteransprüchen sowie der anschließenden Figurenbeschreibung gekennzeichnet.

Die Erfindung wird nachfolgend anhand der Zeichnung näher erläutert. Es zeigen:
- Fig. 1: eine Schnittansicht einer Gehäusehälfte eines Turboladergehäuses, ergänzt um die erfindungsgemäß vorgesehenen erhabenen Stege;
- Fig. 2: eine Gehäusehälfte in Draufsicht (Teilfigur 2A), in seitlichem Schnitt (Teilfigur 2B) und im Querschnitt (Teilfigur 2C);
- Fig. 3: ein Außenteil eines Turbinengehäuses als Teil eines Turboladergehäuses;
- Fig. 4: das Außenteil nach Fig. 3 in seitlicher Ansicht;
- Fig. 5: eine Dichtung zum Zusammenbau der beiden Gehäusehälften des erfindungsgemäßen Turboladergehäuses.

In allen Figuren sind gleiche bzw. funktionsgleiche Elemente und Vorrichtungen - sofern nichts anderes angegeben ist - mit denselben Bezugszeichen versehen worden. Des Weiteren ist die Darstellung des Turboladers in den nachfolgenden Figuren rein schematisch, nicht maßstäblich und stark vereinfacht gezeigt.

In Fig. 1 ist eine Schnittansicht durch eine Gehäusehälfte 10 eines Turboladergehäuses 12 gemäß einer ersten Ausführungsform der Erfindung gezeigt, wobei die Gehäusehälfte 10 dabei von der Dichtungsseite her gezeigt ist. In Fig. 1 ist eine Aussparung 50 oder Nut exemplarisch dargestellt zum Aufnehmen einer Dichtungseinrichtung.

Das Turboladergehäuse 12 weist in dem vorliegenden Beispiel hierbei ein Lagergehäuse 14, ein Turbinengehäuse 16 und ein Verdichtergehäuse 18 auf, wobei z.B. alle drei Gehäuse zu einem Gehäuse 12 zusammengefasst sind. Ein Teil der Erfindung besteht darin im dargestellten Fall z.B. alle drei Gehäuse 14, 16, 18 zunächst gedanklich zusammenzufassen und als ein Teil herzustellen beispielsweise aus einem Stück zu gießen. Zur Montage des Laufzeugs und zur Bearbeitung der inneren Funktionsflächen wird des Weiteren eine Teilung definiert, durch die das Innere des Gehäuses 12 geöffnet werden kann. Diese Teilung erfolgt gemäß der Erfindung in Längsrichtung, also in Richtung der Achse der Läuferwelle, wobei die Teilungsebene in einer oder mehreren Ebenen liegt, in der die Läuferwelle 26 liegt oder die im Wesentlichen zur Läuferwelle 26 parallel angeordnet sind. Die Drehlage der Teilungsebene um die Achse der Läuferwelle kann dabei nach Bedarf in einem Winkel zwischen 0° und 360° gewählt werden. Grundsätzlich kann das gesamte Turboladergehäuse 12, bestehend aus dem Verdichtergehäuse 18, dem Turbinengehäuse 16 und dem Lagergehäu-, se 14 in Längsrichtung geteilt ausgebildet sein. Es kann aber auch nur ein Abschnitt des Turboladergehäuses 12 in Längsrichtung geteilt ausgebildet sein, wobei der Abschnitt beispielsweise ein Laufradgehäuse 16, 18 und/oder das Lagergehäuse 14 umfasst.

Wie in Fig. 1 gezeigt ist, kann das Turbinengehäuse 16, das Lagergehäuse 14 und das Verdichtergehäuse 18 aus zwei Gehäusehälften 10 jeweils am Stück ausgebildet werden. Im vorliegenden Fall in Fig. 1 ist das Turboladergehäuse 12 in einer durchgehenden Ebene, in der die Achse der Läuferwelle 26 liegt, in zwei Gehäusehälften 10 geteilt. Dabei bildet eine erste Gehäusehälfte 10 bestehend z.B. aus dem Turbinengehäuse 16, dem Lagergehäuse 14 und dem Verdichtergehäuse 18 das sog. Oberteil und eine zweite Gehäusehälfte bestehend aus dem Turbinengehäuse 16, dem Lagergehäuse 18 und dem Verdichtergehäuse 14 das sog. Unterteil. In Fig. 1 ist hierbei eine Gehäusehälfte 10 von der Dichtungsseite aus gezeigt. Diese Gehäusehälfte 10 wird dabei mit der anderen Gehäusehälfte (nicht dargestellt) befestigt, beispielsweise verschraubt. Dazu sind in der in Fig. 1 gezeigten Ausführungsform mehrere Bohrungen 20, z.B. hier sechs Bohrungen, zum Verschrauben der beiden Gehäusehälften miteinander vorgesehen. Grundsätzlich kann aber auch jede andere Form der Befestigung der Gehäusehälften vorgesehen sein.

Durch die Teilung in Längsrichtung ergeben sich zunächst direkte Vorteile. So ist eine automatisierte Vormontage des Laufzeugs, darunter die beiden Laufräder, wie das Verdichterrad 22 und das Turbinenrad 24, sowie der Welle 26 möglich. Die anschließende Montage in dem Turbolader wird dabei deutlich vereinfacht. Des Weiteren kann, wenn eine zusätzliche Temperierung, z.B. Kühlung und/oder Heizung, zumindest eines Teils des Turboladergehäuses 12 vorgesehen ist, beispielsweise des Turbinengehäuses 16, des Lagergehäuses 14 und/oder des Verdichtergehäuses 12, ein Fluid- oder Temperiermantel 28 mit einem Fluidkern vorgesehen werden. Dieser Fluidmantel 28 umspannt in dem Beispiel in Fig. 1 z.B. den Lagergehäuseabschnitt 14 und den Turbinengehäuseabschnitt 16 des Turboladergehäuses 12 hinterschneidungsfrei, da in dem vorliegenden Beispiel das Turbinengehäuse 16 und das Lagergehäuse 14 zusätzlich z.B. gekühlt werden sollen. Auf diese Weise muss beispielsweise ein Sandkern zum Herstellen des Fluidmantels 28 nicht aus mehreren Stücken zusammengebaut und geklebt werden.

Ein weiterer Vorteil ist, dass mindestens eine Hälfte oder das gesamte Turboladergehäuse 12 in den Motorblock und/oder Zylinderkopf eines angeschlossenen Motors integrierbar ist. Dabei kann beispielsweise das Unterteil des Turboladergehäuses 12 in den Motorblock und das Oberteil in den Zylinderkopf integriert werden oder auch umgekehrt.

In Fig. 1 ist in dem Lagergehäuseabschnitt 14 des Turboladergehäuses 12 die Welle 26 gelagert, auf welcher das Turbinenrad 24 und das Verdichterrad 22 vorgesehen sind. Das Turbinenrad 24 ist dabei in dem Turbinengehäuseabschnitt 16 und das Verdichterrad 22 in dem Verdichtergehäuseabschnitt 18 angeordnet. Die Welle 26 weist des Weiteren eine Radiallageranordnung 30 und wahlweise zusätzlich eine Axiallageranordnung 32 auf.

Bei dem erfindungsgemäßen Turbolader, welche durch die Teilung z.B. zwei Bohrungshälften bildet, wird die Lageranordnung 30 beispielsweise über federnd wirkende Kragenabschnitte 34 axial verspannt eingebaut.

In Fig. 1 ist die Welle 26 über die Radiallageranordnung 30 und die Axiallageranordnung 32 gelagert. Die Radiallageranordnung 30 weist dabei eine durchgehende Hülse 36 auf, die an ihren beiden Enden jeweils einen Gleitlagerabschnitt 38 bildet, zum Lagern der Welle 26 in radialer Richtung. Die Hülse 36 wird dabei auf die Welle 26 aufgeschoben, wobei die Welle 26 einen Absatz mit einem Anschlag für die Hülse 36 bildet. Am anderen Ende der Hülse 36 ist eine Axiallageranordnung 32 vorgesehen, wobei die Axiallageranordnung 32 wenigstens ein Axiallager in Form einer Axiallagerscheibe 40 aufweist. Zusätzlich ist hier auf der Axiallagerscheibe 40 ein Ölabweisblech 42 angeordnet. Des Weiteren ist auf der Außenseite der Hülse 36 zusätzlich eine Lage 44 aus wenigstens einer oder mehreren Schichten aus hitzebeständigem oder temperaturbeständigem, elastischen Material angeordnet, wie beispielsweise einem Polymer, einem Elastomer und/oder einem Hartgummi.

Auf der Außenseite der Lage 44 aus dem elastischen, temperaturbeständigen Material ist außerdem ein Hülsenelement 46 vorgesehen. Das Hülsenelement 46 ist dabei beispielsweise aus Metall, z.B. Stahl. Alternativ kann das elastische, temperaturbeständige Material auch entfallen und stattdessen das Hülsenelement 46 direkt auf der Außenseite der Hülse 36 vorgesehen werden (nicht dargestellt) oder wahlweise die Hülse 36 so ausgebildet sein, dass sie nicht nur als Radiallageranordnung 30 sondern auch als Hülsenelement 46 fungiert (nicht dargestellt).

Das Hülsenelement 46 weist in dem in Fig. 1 gezeigten Beispiel jeweils einen Kragenabschnitt 34 an seinen beiden Enden auf. Dabei ist wenigstens einer oder beide Kragenabschnitte 34 des Hülsenelements 46 federnd ausgebildet, um zwischen zwei Anschlägen oder Aufnahmen 48 des Turboladergehäuses 12 eingespannt zu werden. Einer oder beide Kragenabschnitt 34 kann ebenso nicht federnd, also steif ausgebildet und zwischen den beiden Aufnahmen 48 eingelegt oder wahlweise auf einer oder beiden Seiten zusätzlich mit Schrauben an den Aufnahmen 48 befestigt werden. Wenigstens einer der federnd wirkenden Kragenabschnitte 34 kann ebenfalls wahlweise zusätzlich mittels z.B. Verschrauben an der jeweiligen Aufnahme 48 befestigt werden. Ein oder beide Kragenabschnitte 34 können dabei einstückig mit dem Hülsenelement 46 verbunden oder als separates Teil an diesem befestigt sein (nicht, dargestellt). Über die beiden Kragenabschnitte 34 des Hülsenelements 46 wird die Lageranordnung 30, hier die Radiallagerlageranordnung 30 bestehend aus der Hülse 36, sowie der elastischen Lage 44, in dem Turboladergehäuse 12 sprich den beiden Gehäusehälften 10 des Turboladergehäuses 12 in axialer Richtung fixiert oder verspannt.

Wenigstens ein Kragenabschnitt 34 kann dabei außerdem zusätzlich aus dem Ölraum herausgeführt werden, wie in Fig. 1 auf der Turbinenseite, und weitere Funktionen als Hitzeschild übernehmen. Einer oder beide Kragenabschnitte 34 können aber auch innerhalb des Ölraums verbleiben, wie der Kragenabschnitt 34 des Hülsenelements 46 auf der Verdichterseite. Des Weiteren hat eine solche Lageranordnung 30 den Vorteil, dass sie in sich komplett vormoniert werden kann und somit beispielsweise ohne die umgebenden Gehäuse betriebsausgewuchtet werden kann.

Die Radiallageranordnung 30 und Axiallageranordnung 32 in Fig. 1 sind lediglich ein Beispiel für eine Lagerung der Welle 26 in radialer und axialer Richtung. Grundsätzlich kann die Welle 26 in dem erfindungsgemäßen Turboladergehäuse 12 jede andere Radiallageranordnung und/oder Axiallageranordnung aufweisen. So kann die Hülse 36 beispielsweise auch durch zwei radiale Gleitlager ersetzt werden (nicht dargestellt), wobei die beiden Gleitlager beispielsweise wahlweise zusätzlich eine Distanzhülse aufweisen oder das Hülsenelement 46 auf seiner Innenseite jeweils eine Aufnahme für ein oder beide Gleitlager aufweisen (nicht dargestellt). Neben Gleitlagern, können auch berührungslose Lager wie z.B. Magnetlager, sowie Wälzlager zur radialen und/oder axialen Lagerung vorgesehen werden. Die Erfindung ist nicht auf die gezeigten und beschriebenen Beispiele für Lageranordnungen beschränkt.

In dem in Fig. 1 dargestellten Fluidraum 28 sind zwei erfindungsgemäß vorgesehenen erhabenen Stege 6 eingezeichnet, die eine längliche Ausdehnung in Achsrichtung der Läuferwelle haben. Die in Fig. 1 eingezeichneten, erhabenen Stege 6 weisen eine Höhe H auf, die von einer Randseite des Fluidraums 28 bis zur dieser Randseite gegenüberliegenden Randseite des Fluidraums 28 reicht und die somit der Höhe des Fluidraums 28 an dieser Stelle entspricht.

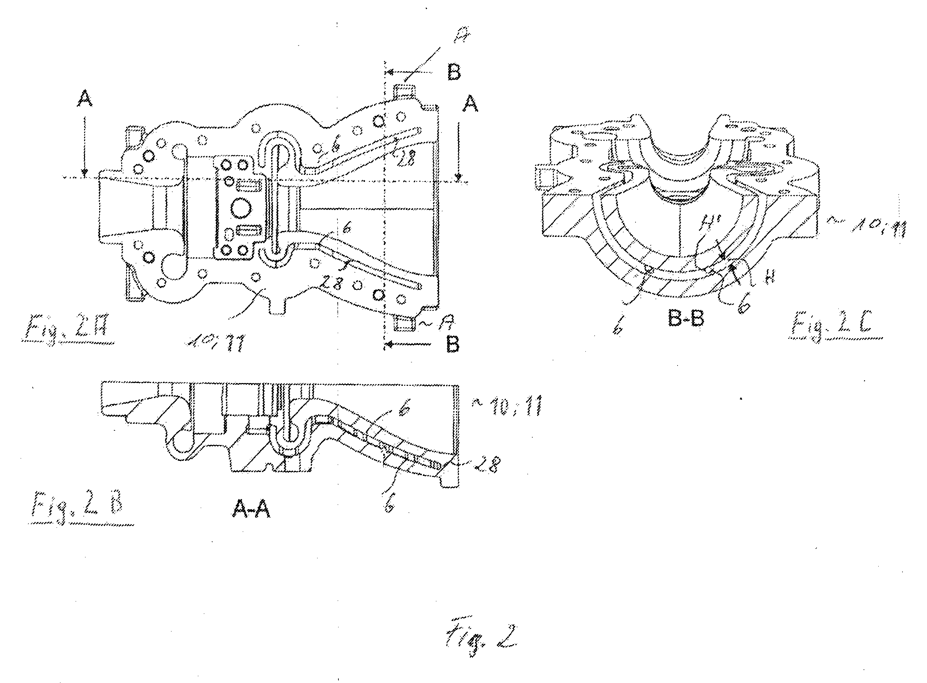

Die Fig. 2 zeigt in ihrer ersten Teilfigur 2A eine Draufsicht auf eines der Gehäuseteile 10 bzw. 11 mit einem Fluidraum 28 und einer Mehrzahl darin angeordneter erhabener Stege 6. Bei Beschicken des Fluidraums 28 (im Betrieb eines fertig montierten Turboladers mit dem erfindungsgemäßen Turboladergehäuse) mit einem Kühlmedium wirken die erhabenen Stege 6 wie Drosselstellen für das Kühlmedium; entsprechend bilden sich beim Kühlmedium Turbulenzen und in verschiedene Richtungen verlaufende Strömungen aus. Genau dies ist erfindungsgemäß beabsichtigt, denn damit wird verhindert, dass einzelne Teilbereiche des Turboladers ungenügend oder gar überhaupt nicht gekühlt werden. Solche Mängel hätten nämlich vorzeitige Schäden am Turbolader zur Folge, zumindest beeinträchtigen sie langfristig dessen Lebensdauer.

Die Teilfigur 2B zeigt die Gehäusehälfte der Teilfigur 2A in einem seitlichen Schnitt entlang der Schnittlinie A-A der Teilfigur 2A. Auch hier sind die erhabenen Stege 6 wieder zu erkennen. Die Teilfigur 2C zeigt die in der Teilfigur 2A dargestellte Gehäusehälfte im Querschnitt entlang der Schnittlinie B-B von Fig. 2A. Hierbei ist auch gezeigt, dass die erhabenen Stege 6 nicht notwendigerweise die zuvor beschriebene Höhe H aufweisen müssen, die von einer Randseite des Fluidraums 28 reicht bis zur dieser Randseite gegenüberliegenden Randseite, sondern dass die Höhe der erhabenen Stege 6 auch geringer sein kann. Dies ist in der Teilfigur 2C mit dem Bezugszeichen H' kenntlich gemacht. Die Teilfigur 2A zeigt außerdem zwei Anschlussstellen A, über die das Kühlmedium dem Turbolader im Betrieb zuführbar und von ihm wieder abführbar ist.

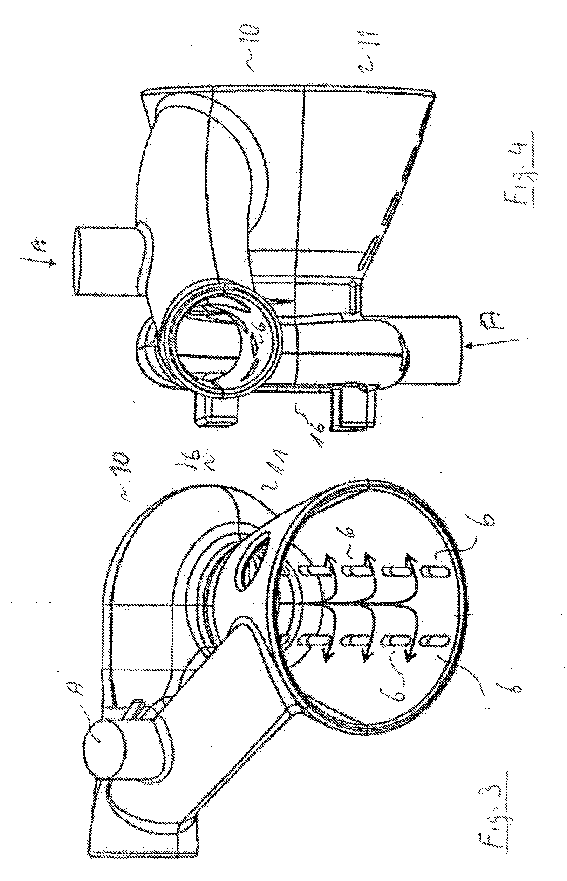

Fig. 3 zeigt anhand eines Außenteils des Turbinengehäuses 16 eines Turboladers mit den (zumindest teilweise dargestellten) beiden Gehäuseteilen 10 und 11 eine mögliche Positionierung der erhabenen Stege 6 und des daraus resultierenden, mit Pfeilen verdeutlichten Strömungsverhaltens des Kühlmediums. Weiterhin ist auch einer der bereits erwähnten Anschlüsse A dargestellt.

Die Fig. 4 zeigt den in Fig. 3 dargestellten Außenteil in seitlicher Ansicht samt einigen der erhabenen Stege 6 sowie den Anschlüssen A.

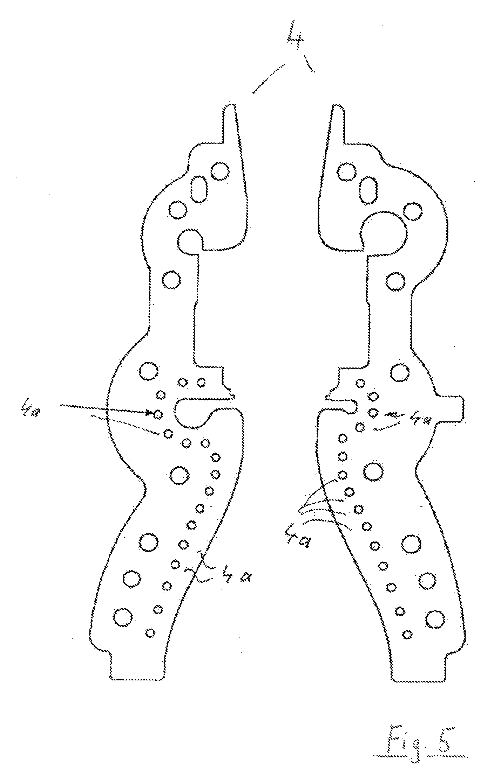

Die Fig. 5 zeigt eine Dichtung 4, wie sie beim Zusammenbau der beiden Gehäusehälften 10 und 11 eines erfindungsgemäßen Turboladergehäuses eines Turboladers Verwendung finden kann. Neben verschiedenen anderen, hier nicht interessierenden Durchbrüchen weist die Dichtung 4 in dem Bereich, in dem sie die Fluidräume 28 der beiden Gehäusehälften 10 und 11 voneinander trennt, eine Anzahl von Aussparungen 4a, z. B. in Form von Bohrungen oder ausgestanzten Löchern, auf. Bei dem dadurch möglichen Übertritt des Kühlmediums vom einen Gehäuseteil 10 bzw. 11 in den jeweils anderen Gehäuseteil 11 bzw. 10 treten an den Aussparungen 4a Verwirbelungen des Kühlmediums auf, die dann ebenfalls, wie bereits bzgl. der erhabenen Stege 6 beschrieben, ein gleichmäßiges Kühlen der zu kühlenden Bauteile fördern.

## Patentansprüche

1. Turboladergehäuse bei dem zumindest ein Abschnitt (12, 14, 16, 18) in Längsrichtung in zwei Gehäusehälften (10, 11) unterteilt ist, die im zusammengebauten Zustand abschnittsweise ein Lagergehäuse, ein Turbinengehäuse (16) und ein Verdichtergehäuse bilden, wobei das Turboladergehäuse wenigstens einen Fluidraum (28)zur Aufnahme eines Kühlmediums aufweist, der im Lagergehäuse und/oder im Turbinengehäuse (16) und/oder im Verdichtergehäuse wenigstens einer der beiden Gehäusehälften (10, 11) angeordnet ist, **dadurch gekennzeichnet, dass** der Fluidraum (28) eine Mehrzahl von erhabenen Stegen (6) aufweist, zur Ausbildung von in verschiedene Richtungen verlaufenden Strömungen des Kühlmediums.

2. Turboladergehäuse nach Anspruch 1,
**dadurch gekennzeichnet, dass** wenigstens einer der erhabenen Stege (6) eine Höhe (H) aufweist, die in ihrem Wert gleich ist dem Wert einer Höhe, die der Fluidraum (28) an der Stelle, wo sich der erhabene Steg (6) befindet, aufweist.

3. Turboladergehäuse nach einem der vorhergehenden Ansprüche, **dadurch gekennzeichnet, dass** wenigstens einer der erhabenen Stege (6) eine Höhe (H') aufweist, die in ihrem Wert geringer ist als der Wert einer Höhe, die der Fluidraum (28) an der Stelle, wo sich der erhabene Steg (6) befindet, aufweist.

4. Turboladergehäuse nach einem der vorhergehenden Ansprüche, **dadurch gekennzeichnet, dass** das Turboladergehäuse Anschlüsse (A) aufweist, über die dem Fluidraum (28) ein Kühlmedium zuführbar und von ihm abführbar ist.

5. Turboladergehäuse nach einem der vorhergehenden Ansprüche, **dadurch gekennzeichnet, dass** es zwischen den beiden Gehäusehälften (10, 11) eine Dichtung (4) aufweist, welche in einem Fall, in dem sich der Fluidraum (28) über beide Gehäusehälften (10, 11) hinweg erstreckt, wenigstens eine Aussparung (4a) aufweist, über die das Kühlmedium von einer (10; 11) der beiden Gehäusehälften (10, 11) in die jeweils andere (11; 10) der beiden Gehäusehälften (10, 11) überströmen kann.

6. Turboladergehäuse nach Anspruch 5,
**dadurch gekennzeichnet, dass** die Dichtung (4) eine Mehrzahl von Aussparungen (4a) aufweist, vorzugsweise in Gestalt von Bohrlöchern oder von gestanzten Löchern.

## Claims

1. Turbocharger housing in which at least one portion (12, 14, 16, 18) is divided in a longitudinal direction into two housing halves (10, 11), which in the assembled state in portions form a bearing housing, a turbine housing (16) and a compressor housing, wherein the turbocharger housing comprises at least one fluid chamber (28) for receiving a cooling medium, which is arranged in the bearing housing and/or in the turbine housing (16) and/or in the compressor housing of at least one of the two housing halves (10, 11), **characterized in that**, the fluid chamber (28) comprises a plurality of raised webs (6), for forming flows of the cooling medium running in various directions.

2. Turbocharger housing according to Claim 1, **characterized in that** at least one of the raised webs (6) has a height (H), which in its value is equal to the value of a height of the fluid chamber (28) at the point where the raised web (6) is situated.

3. Turbocharger housing according to either of the preceding claims, **characterized in that** at least one of the raised webs (6) has a height (H'), which in its value is less than the value of a height of the fluid chamber (28) at the point where the raised web (6) is situated.

4. Turbocharger housing according to one of the preceding claims, **characterized in that** the turbocharger housing comprises connections (A), via which a cooling medium can be delivered to and led off from the fluid chamber (28).

5. Turbocharger housing according to one of the preceding claims, **characterized in that** between the two housing halves (10, 11) it comprises a gasket (4), which in a case where the fluid chamber (28) extends over both housing halves (10, 11) comprises at least one cutout (4a), via which the cooling medium is able to flow from one (10; 11) of the two housing halves (10, 11) into the other (11; 10) of the two housing halves (10, 11).

6. Turbocharger housing according to Claim 5, **characterized in that** the gasket (4) has a plurality of cutouts (4a) preferably in the form of bore holes or of punched holes.

## Revendications

1. Carter de turbocompresseur dans lequel au moins une partie (12, 14, 16, 18) est divisée en direction longitudinale en deux moitiés de carter (10, 11), qui forment partiellement à l'état assemblé un logement de palier, une enveloppe de turbine (16) et une enveloppe de compresseur, dans lequel le carter de turbocompresseur présente au moins une chambre de fluide (28) destinée à contenir un milieu de refroidissement, qui est disposée dans le logement de palier et/ou dans l'enveloppe de turbine (16) et/ou dans l'enveloppe de compresseur d'au moins une des deux moitiés de carter (10, 11), **caractérisé en ce que** la chambre de fluide (28) présente une multiplicité de nervures surélevées (6), pour la formation d'écoulements du milieu de refroidissement s'étendant dans différentes directions.

2. Carter de turbocompresseur selon la revendication 1, **caractérisé en ce qu'**au moins une des nervures surélevées (6) présente une hauteur (H), dont la valeur est égale à la valeur d'une hauteur, que la chambre de fluide (28) présente à l'endroit où la nervure surélevée (6) se trouve.

3. Carter de turbocompresseur selon l'une quelconque des revendications précédentes, **caractérisé en ce qu'**au moins une des nervures surélevées (6) présente une hauteur (H'), dont la valeur est inférieure à la valeur d'une hauteur, que la chambre de fluide (28) présente à l'endroit où la nervure surélevée (6) se trouve.

4. Carter de turbocompresseur selon l'une quelconque des revendications précédentes, **caractérisé en ce que** le carter de turbocompresseur présente des raccords (A), par lesquels un milieu de refroidissement peut être fourni à la chambre de fluide (28) et évacué de celle-ci.

5. Carter de turbocompresseur selon l'une quelconque des revendications précédentes, **caractérisé en ce qu'**il présente entre les deux moitiés de carter (10, 11) un joint d'étanchéité (4) qui, dans un cas où la chambre de fluide (28) s'étend sur les deux moitiés de carter (10, 11), présente au moins une découpe (4a), par laquelle le milieu de refroidissement peut s'écouler d'une (10; 11) des deux moitiés de carter (10, 11) respectivement dans l'autre (11; 10) des deux moitiés de carter (10, 11).

6. Carter de turbocompresseur selon la revendication 5, **caractérisé en ce que** le joint d'étanchéité (4) présente une multiplicité de découpes (4a), de préférence sous la forme de trous percés ou de trous estampés.
